# EUROPEAN PATENT SPECIFICATION

(11) **EP 2 690 373 B1**
(45) Date of publication and mention of the grant of the patent: **16.03.2016**
(21) Application number: 12760777.8
(22) Date of filing: 21.03.2012
(51) Int. Cl.: F24F 13/20, F24F 11/00, F24F 11/02, F24F 1/00, F24F 3/16

(54) **INDOOR UNIT OF AIR CONDITIONER**
INNENRAUMEINHEIT EINER KLIMAANLAGE
UNITÉ INTÉRIEURE D'APPAREIL DE CONDITIONNEMENT D'AIR

(30) Priority: 22.03.2011 JP 2011061953
(43) Date of publication of application: 29.01.2014
(73) Proprietor: Panasonic Corporation, Osaka 571-8501 (JP)
(72) Inventor: HASEGAWA, Hiroki, Osaka 540-6207 (JP); KIDA, Satoshi, Osaka 540-6207 (JP); UEJIMA, Hiroto, Osaka 540-6207 (JP); SAKAMOTO, Naoki, Osaka 540-6207 (JP); NOMA, Hirofumi, Osaka 540-6207 (JP)
(74) Representative: Eisenführ Speiser
(86) International application number: PCT/JP2012/001939
(87) International publication number: WO 2012/127857

(56) References cited:
- JP-A- 2001 065 916
- JP-A- 2003 106 626
- JP-A- 2004 006 296
- JP-A- 2005 091 580
- JP-A- 2010 236 753
- JP-U- H0 621 173
- JP-U- 60 155 272

## Description

### Technical Field

The present invention relates to an air conditioner provided with a high-voltage generating device to enhance an air cleaning function.

### Background Art

In applications where an electronic components box made of a conductive material such as, for example, a metal is used, if an electrically-charged user touches the electronic components box, static electricity is discharged. In order to address this problem, for example, a metallic casing of the electronic components box is sufficiently away from a printed circuit board accommodated within the electronic components box. Alternatively, as in an air conditioner as disclosed in Patent Document 1, the metallic casing of the electronic components box is electrically connected to a heat exchanger employed as a virtual earth to allow static electricity discharged from the user to the electronic components box to escape into the heat exchanger, i.e., a relatively large conductive body, thereby preventing malfunction or destruction of equipment that may be caused by static electricity.

In recent years, an air conditioner having a superior dust collecting effect and a superior deodorant effect has been proposed that is provided with a high-voltage generating device to enhance an air cleaning function. In the air conditioner of this kind having the high-voltage generating device, because the high-voltage generating device uses a high voltage, it is likely that electrostatic induction or high-voltage leakage may occur due to corona discharge that is caused by insulation failure of a high-voltage transformer or poor connection of, for example, a terminal portion for connecting high-voltage lead wires. If electrostatic induction or high-voltage leakage occurs, the metallic electronic components box is electrically charged at a high potential and electric discharge from the electrically-charged electronic components box to its surrounding electronic components occurs. As a result, equipment is likely to malfunction or be destroyed.

In order to address this problem, as in an air conditioner as disclosed in, for example, Patent Document 2, the metallic casing of the electronic components box is connected to a discharge pattern on the printed circuit board and the discharge pattern is connected to a control ground pattern on the printed circuit board by a resistor of a constant value, thereby making it possible to reduce dv/dt at the time of discharge from the electronic components box to the electronic components. Alternatively, as in an air conditioner as disclosed in Patent Document 3, two lines of a commercially available power source are connected to a ground level via respective capacitors for common mode noise suppression and the electronic components box (and metallic components such as, for example, the heat exchanger) within the indoor unit is connected to the ground level and to one of the two lines of the commercially available power source via a resistor. That is, electrification of the electronic components box caused by the high-voltage generating device is prevented by an electrostatic shielding effect.

Patent document JP-A-2004006296 discloses an indoor unit according to the preamble of claim 1.

### Patent Document(s)

- Patent Document 1: Japanese Laid-Open Patent Publication No. 11-51420
- Patent Document 2: Japanese Laid-Open Patent Publication No. 2009-103391
- Patent Document 3: Japanese Laid-Open Patent Publication No. 2000-146221

### Summary of the Invention

### Problems to be solved by the Invention

In the case of the air conditioner as disclosed in Patent Document 1, static electricity generated when the electrically-charged user touches the metallic electronic components box is absorbed by the heat exchanger, i.e., a large conductive body through the electrical connection of the electronic components box to the heat exchanger. However, in the case of the air conditioner having a high-voltage generating device and a high-voltage power source for supplying a high voltage to the high-voltage generating device, if electrostatic induction or high-voltage leakage occurs successively, static electricity or a high voltage is discharged from the electronic components box to the heat exchanger, but electrification of the electronic components box may not be positively avoided. To combat this, it is conceivable that the heat exchanger is grounded. In this case, however, it is necessary to provide a sufficient distance between the electronic components box and the printed circuit board accommodated therein, taking into account the possibility of entry of lightning surge from an alternating-current power source in a common mode, but this increases the size of the electronic components box.

In the case of the air conditioner as disclosed in Patent Document 2, the metallic electronic components box has sharp edges formed therewith and held in contact with the discharge pattern on the printed circuit board, and the discharge pattern is connected to the control ground pattern by a resistor of a constant value. By this construction, even if the electronic components box is electrically charged, electric charge generated therein is discharged from the electronic components box to the control ground pattern via the resistor of the constant value, thereby reducing dv/dt at the time of discharge that is essentially responsible for malfunction or destruction of equipment. In principle, however, electric charge is actively discharged from the electronic components box to the control ground pattern to attenuate discharge energy by the resistor and, hence, the very electrification of the electronic components box is not prevented.

In the case of the air conditioner as disclosed in Patent Document 3, the ground level, to which the metallic components such as the electronic components box, the heat exchanger and the like are connected, is connected to a line of the commercially available power source via a resistor, i.e., electrification of the metallic components caused by the high-voltage generating device is prevented by the electrostatic shielding effect. However, the electrostatic shielding effect may not be sufficiently produced depending on a positional relationship between a source of generation of high-voltage leakage such as the high-voltage power source, the high-voltage generating device and the like and the metallic components such as the electronic components box, the heat exchanger and the like. That is, a difficulty is encountered in achieving a good balance between prevention of electrification of the metallic components and a high degree of freedom in the arrangement of the metallic components.

Also, in the indoor unit of the air conditioner, if an insulated power source is interposed between the alternating-current power source and the high-voltage generating device, there is no discharge pathway from a secondary side of the insulated power source to a ground potential, i.e., a reference potential of the alternating-current power source. Because of this, electrostatic induction and high-voltage leakage, which may cause electrification of the electronic components box, are likely to occur on the secondary side of the insulated power source.

It is accordingly an objective of the present invention to provide an indoor unit of an air conditioner capable of preventing electrification of a metallic electronic components box due to electrostatic induction or high-voltage leakage caused by a high-voltage generating device or due to contact of an electrically-charged user to thereby prevent malfunction or destruction of equipment that has been hitherto caused by the electrification of the electronic components box.

### Means to Solve the Problems

In accomplishing the above objective, the present invention has the following construction.

According to an aspect of the present invention, there is provided an indoor unit of an air conditioner comprising:
an insulated control power source adapted to generate a low control voltage from an output voltage of an alternating-current power source;
a high-voltage power source operable to generate a high voltage from the low control voltage;
a high-voltage generating device to which the high voltage is applied;
an electronic components box made of a metal and accommodating at least the control power source therein;
a first resistor operable to electrically connect a secondary side ground of the control power source on a side of the high-voltage generating device to the electronic components box; and
a second resistor operable to electrically connect a primary side ground of the control power source on a side of the alternating-current power source to the secondary side ground;
wherein the primary side ground is grounded via a grounded wire of the alternating-current power source.

### Effects of the Invention

According to the present invention, because electrification of the metallic electronic components box due to electrostatic induction or high-voltage leakage caused by the high-voltage generating device or the high-voltage power source or due to contact of an electrically-charged user can be prevented, malfunction or destruction of equipment caused by the electrification of the electronic components box can be prevented without limiting the arrangement of the electronic components box or the high-voltage generating device within the indoor unit of the air conditioner.

### Brief Description of the Drawings

The above construction and features of the present invention will become apparent from the following description of preferred embodiments thereof with reference to the accompanying drawings, wherein:
Fig. 1 is an exploded fragmentary perspective view of an indoor unit of an air conditioner according to a first embodiment of the present invention,
Fig. 2 is a structural view of a high-voltage generating device according to the first embodiment of the present invention,
Fig. 3 is an exploded view of an electronic components box of the indoor unit according to the first embodiment of the present invention,
Fig. 4 is a circuit block diagram according to the first embodiment of the present invention,
Fig. 5 is a perspective view of an indoor unit according to a second embodiment of the present invention,
Fig. 6 is a fragmentary perspective view of the indoor unit according to the second embodiment of the present invention, and
Fig. 7 is an exploded perspective view of an electronic components box according to the second embodiment of the present invention.

### Embodiments for Carrying out the Invention

The present invention is directed to an indoor unit of an air conditioner that includes an insulated control power source for generating a low control voltage from an output voltage of an alternating-current power source, a high-voltage power source for generating a high voltage from the low control voltage, a high-voltage generating device to which the high voltage is applied, an electronic components box made of a metal and accommodating at least the control power source therein, a first resistor for electrically connecting a secondary side ground of the control power source on a side of the high-voltage generating device to the electronic components box, and a second resistor for electrically connecting a primary side ground of the control power source on a side of the alternating-current power source to the secondary side ground. The primary side ground is grounded via a grounded wire of the alternating-current power source. Because the metallic electronic components box is connected to the earth via the first resistor, the second resistor and the grounded wire of the alternating-current power source, electrification of the metallic electronic components box is prevented. As a result, it becomes possible to prevent electrification of the metallic electronic components box due to electrostatic induction or high-voltage leakage caused by the high-voltage generating device or the high-voltage power source or due to contact of an electrically-charged user to thereby prevent malfunction or destruction of equipment that may be caused by discharge from the electrically-charged electronic components box to the equipment.

The electronic components box may be disposed in front of a heat exchanger and the first and second resistors may function as a double insulator. This feature of the present invention can dispense with any additional insulting structural members to prevent the user from touching the metallic electronic components box. Also, malfunction or destruction of equipment, which may be caused by electrification of the electronic components box due to contact of an electrically-charged user, can be prevented.

Embodiments of the present invention are described hereinafter with reference to the drawings, but the present invention is not limited to the embodiments.

### (Embodiment 1)

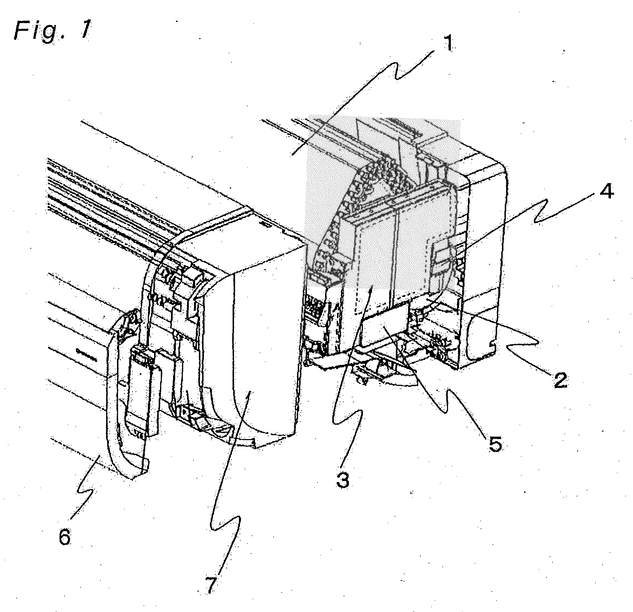

Fig. 1 is an exploded fragmentary perspective view of an indoor unit of an air conditioner according to a first embodiment of the present invention. The indoor unit includes a heat exchanger 1, a fan motor 2 for conveying air heat-exchanged by the heat exchanger 1 to an interior of a room, an electronic components box 3 for accommodating, for example, electronic components therein to control a speed (that is, an air volume) of the fan motor 2, a high-voltage generating device 4 used for air cleaning, and a high-voltage power source 5 for applying a high-voltage to the high-voltage generating device 4. As shown in Fig. 1, the electronic components box 3 is located on the side (right side) of the heat exchanger 1 as viewed from the front side (on the side of a front panel 6) of the air conditioner. The high-voltage generating device 4 is disposed behind the electronic components box 3 and the high-voltage power source 5 is disposed below the electronic components box 3. Because the electronic components box 3 is generally covered with a front frame 7 of the indoor unit, a user cannot touch the electronic components box 3.

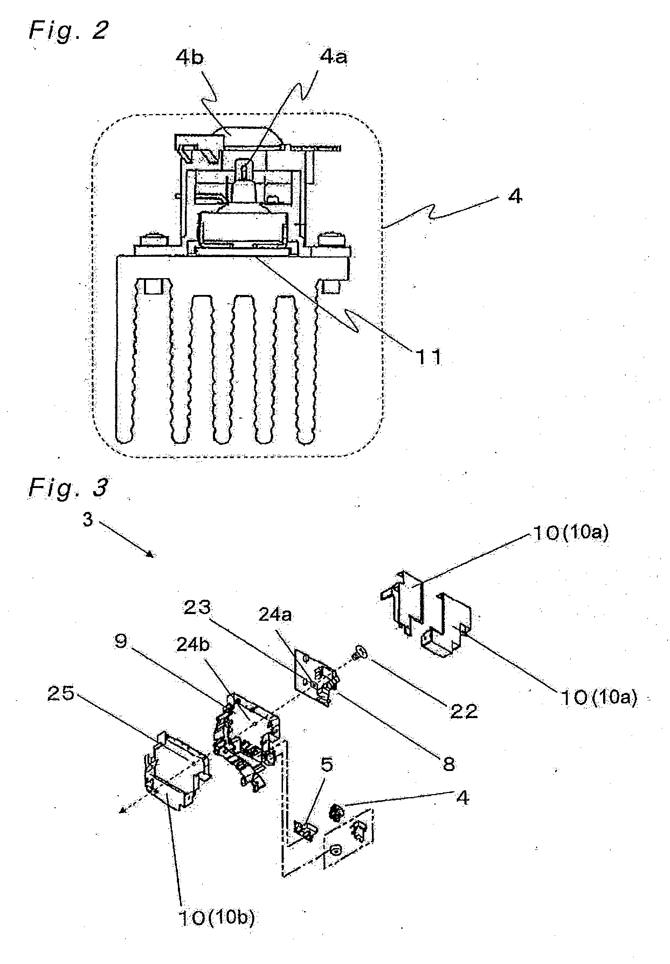

Fig. 2 is a structural view of the high-voltage generating device 4. A discharge electrode 4a is supplied with water that has been cooled and condensed by a Peltier element 11. An opposite electrode 4b is provided so as to confront the discharge electrode 4a with a gap therebetween. Application of a high voltage of the high-voltage power source 5 between the discharge electrode 4a and the opposite electrode 4b produces an electrostatic atomizing effect to thereby generate nanosized ions, which in turn enhance a deodorant effect of the air conditioner. The high-voltage generating device in this embodiment performs air cleaning such as, for example, deodorizing by generating the nanosized ions, but the present invention does not limit an air cleaning method of the high-voltage generating device if the high-voltage power source is required.

Each of the high-voltage power source 5, the high-voltage generating device 4, and high-voltage electric wires (not shown) for connecting the high-voltage power source 5 and the high-voltage generating device 4 may act as a source of generation of high-voltage leakage, and as described above (as shown in Fig. 1), these components and the electronic components box 3 that may be electrically charged due to high-voltage leakage are disposed such that the heat exchanger 1 is not interposed in between any two of them.

Fig. 3 is an exploded view of the electronic components box 3 of the indoor unit of the air conditioner according to the first embodiment of the present invention. The electronic components box 3 includes a metallic casing 10 made up of a plurality of separable metallic casing segments 10a, 10b and accommodates a printed circuit board 8, on which electronic components are mounted, and a flame-retardant resin casing 9. An upper metallic casing segment 10a is located on the side of a surface of the printed circuit board 8 on which the electronic components are mounted, and the flame-retardant resin casing 9 is located on the side of a rear surface of the printed circuit board 8 opposite to the electronic components-mounting surface. A lower metallic casing segment 10b is located on the side opposite to a surface of the flame-retardant resin casing 9 confronting the printed circuit board 8. By this construction, even if the electronic components on the printed circuit board 8 ignite, for example, the flam-retardant resin casing 9 and the metallic casing 10 can smother and extinguish a fire. Also, a male screw 22 passes through a through-hole 24a defined in a screw terminal portion 23 mounted on the electronic components-mounting surface of the printed circuit board 8 and then through a through-hole 24b defined in the flame-retardant resin casing 9 and is threaded into a female screw 25 formed in the lower metallic casing segment 10b. The screw terminal portion 23 and the metallic casing 10 are electrically connected to each other by the male screw 22.

The upper metallic casing segment 10a located on the side of the electronic components-mounting surface of the printed circuit board 8 and the lower metallic casing segment 10b located on the side of the rear surface of the printed circuit board 8, both shown in Fig. 3, are mechanically engaged with and electrically connected to each other, thereby making up the electronic components box 3 shown in Fig. 1.

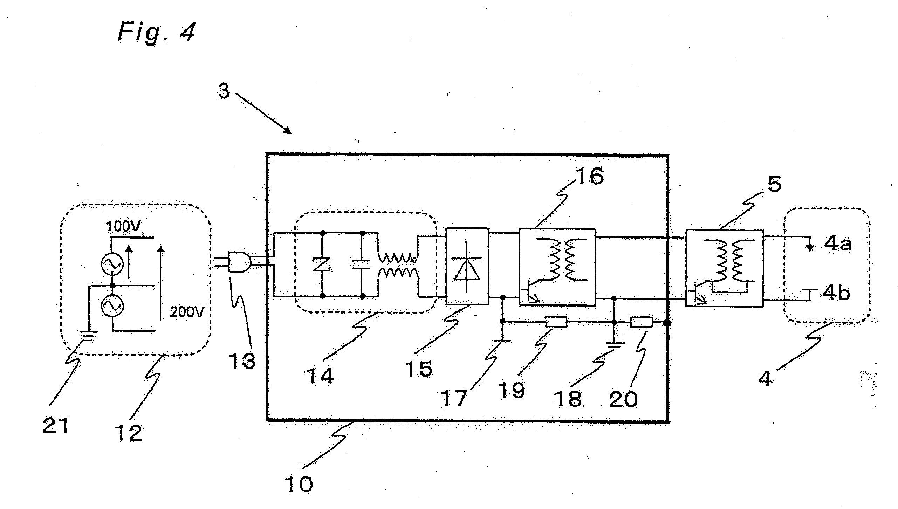

Fig. 4 is a circuit block diagram of the indoor unit of the air conditioner according to the first embodiment of the present invention. An electronic control device (not shown) mounted in the indoor unit of the air conditioner is supplied with electric power from an alternating-current power source 12 of, for example, AC100V or AC200V through a plug 13. The alternating-current power source 12 is an alternating-current power source of a single-phase two-wire or single-phase three-wire system having a grounded wire (electrically connected to the earth 21). If the alternating-current power source 12 is of a single-phase two-wire system of, for example, AC100V or AC200V, the grounded wire of the alternating-current power source 12 is electrically connected to a cold line of the plug 13. Also, if the alternating-current power source 12 is of a single-phase three-wire system of, for example, AC200V, a central tap of a columnar transformer is grounded.

The electric power of the alternating-current power source 12 is supplied to the indoor unit of the air conditioner via a relay (not shown) and, at the same time, after the electric power has been rectified and smoothed by a noise filter 14 and a rectifier circuit 15, it is supplied to a power source (not shown) for the fan motor 2 and a control power source 16.

The control power source 16 is an insulated power source and has an insulated transformer, which generates a low control voltage from an output voltage of the alternating-current power source 12. An output voltage of the control power source 16 is supplied to the high-voltage power source 5, a microcomputer (not shown) and various actuators (not shown) such as, for example, a stepping motor for changing a direction of air conveyed toward an interior of a room. Also, a primary side (the side of the alternating-current power source 12) and a secondary side (the side of the high-voltage power source 5 and the high-voltage generating device 4) of the control power source 16 are insulated from each other by the insulated transformer of the control power source 16.

A primary side ground 17 on the primary side (the side of the alternating-current power source 12) and a secondary side ground 18 on the secondary side (the side of the high-voltage power source 5 and the high-voltage generating device 4) of the control power source 16 are electrically connected to each other by a resistor 19 (second resistor) having a performance corresponding to basic insulation. The primary side ground 17 is electrically connected to the grounded wire of the alternating-current power source 12 and the secondary side ground 18 is connected to one end of a resistor 20 (first resistor). The other end of the resistor 20 is electrically connected to the screw terminal portion 23 of the printed circuit board 8. Accordingly, the secondary side ground 18 is electrically connected to the metallic casing 10 via the screw terminal portion 23 and the male screw 22.

In other words, the metallic casing 10 is electrically connected to the secondary side ground 18 via the resistor 20. Operation of the air conditioner of the above-describe construction is explained hereinafter.

The metallic casing 10 is connected to the earth 21 via the resistor 20, the resistor 19, the plug 13 and the alternating-current power source 12. Accordingly, if the metallic casing 10 is electrically charged at a high potential due to high-voltage leakage, electric charge is discharged to the earth 21 from the metallic casing 10 via the resistor 20, the resistor 19 and the plug 13, thus making it possible to prevent malfunction or destruction of equipment that may be caused by electric discharge from the electronic components box 3 to the electronic components on the printed circuit board 8 accommodated therein. Also, the electronic components box 3 produces an electrostatic shielding effect in the presence or absence of the electrostatic shielding effect by the heat exchanger 1. Accordingly, the degree of freedom in the arrangement of the electronic components box 3, the heat exchanger 1, the high-voltage power source 5 and the high-voltage generating device 4 is enhanced. By way of example, if there is no need to arrange the high-voltage power source 5 and the high-voltage generating device 4 within an air trunk inside the heat exchanger 1, not only is the productivity of the indoor unit of the air conditioner enhanced, but the air conditioning efficiency is also enhanced.

Although in the first embodiment the high-voltage power source 5 is located outside the metallic casing 10 of the electronic components box 3, the high-voltage power source 5 together with the control power source 16 may be accommodated within the metallic casing 10.

### (Embodiment 2)

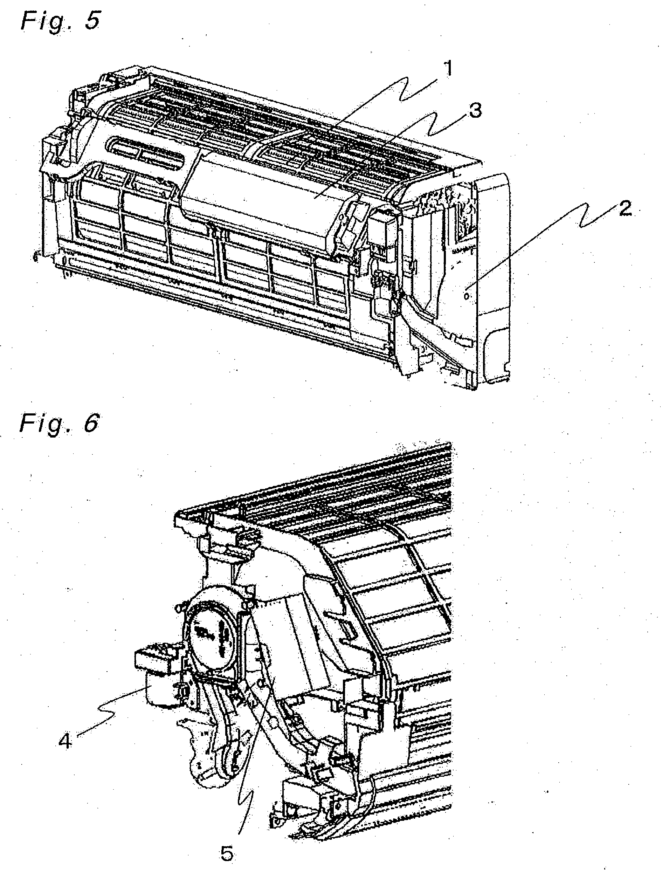

Fig. 5 is a perspective view of an indoor unit of an air conditioner according to a second embodiment of the present invention. As shown in Fig. 5, an electronic components box 3 is located in front of a heat exchanger 1 (on the front side of the indoor unit). Accordingly, the size of the heat exchanger 1 in a longitudinal direction thereof (lateral direction) can be increased, compared with a case where the electronic components box 3 is located laterally of the heat exchanger 1 as in the first embodiment, thus resulting in an increase in air conditioning efficiency of the air conditioner. Fig. 6 is a fragmentary perspective view of the indoor unit according to the second embodiment as viewed from a direction different from that of Fig. 5. As shown in Fig. 6, a high-voltage power source 5 and a high-voltage generating device 4 are located on the left side of the indoor unit as viewed from the front side of the air conditioner. In the indoor unit according to the second embodiment, the electronic components box 3 is located at a position which a user can touch if a front panel 6 of the indoor unit (see Fig. 1) is removed.

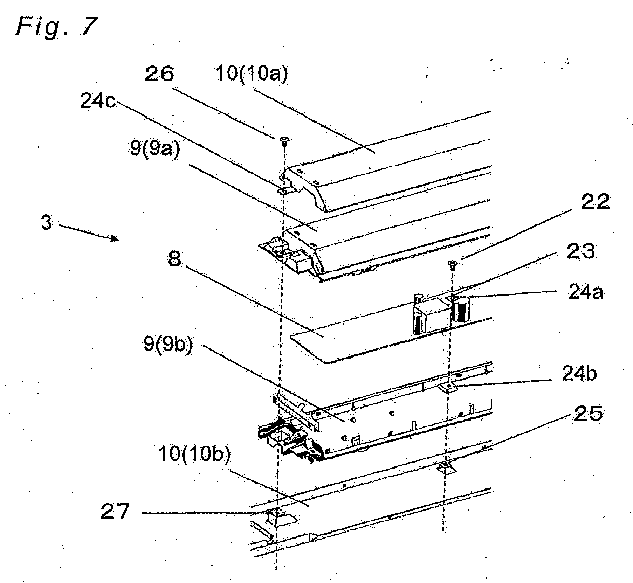

Fig. 7 is an exploded perspective view of the electronic components box 3. A printed circuit board 8 is encircled by a flame-retardant resin casing 9 (9a, 9b), which is in turn encircled by a metallic casing 10 (10a, 10b), thereby accommodating the printed circuit board 8 within the electronic components box 3. By this construction, even if electronic components on the printed circuit board 8 ignite, the flam-retardant resin casing 9 and the metallic casing 10 can smother and extinguish a fire.

Also, a male screw 22 passes through a through-hole 24a defined in a screw terminal portion 23 mounted on an electronic components-mounting surface of the printed circuit board 8 and then through a through-hole 24b defined in a lower flame-retardant resin casing segment 9b and is threaded into a female screw 25 formed in a lower metallic casing segment 10b on a rear side of the printed circuit board 8. As shown in Fig. 7, an upper metallic casing segment 10a located on the electronic components-mounting surface of the printed circuit board 8 and the lower metallic casing segment 10b located on the rear side of the printed circuit board 8 are secured and electrically connected to each other by a male screw 26 that passes through a through-hole 24c defined in the upper metallic casing segment 10a and is threaded into a female screw 27 defined in the lower metallic casing segment 10b, thereby making up the electronic components box 3 shown in Fig. 5.

A circuit configuration of the indoor unit of the air conditioner according to the second embodiment is almost the same as that of the indoor unit of the air conditioner according to the first embodiment as shown in Fig. 4. Accordingly, only different portions are explained with reference to Fig. 4. In this second embodiment, a resistor 20 connected to the metallic casing 10 has a performance corresponding to supplementary insulation. By way of example, the resistor 20 has a resistance value of 2 MΩ or more and functions as an insulating resistor. Accordingly, both of a resistor 19 having a performance corresponding to basic insulation and the resistor 20 having a performance corresponding to supplementary insulation function as a double insulator that prevents electrification of the electronic components box 3 caused by the high-voltage generating device 4 and the high-voltage power source 5 and protects a user who has touched the electronic components box 3 from electric shock. Also, if an electrically-charged user touches the metallic casing 10 of the electronic components box 3, static electricity (electrostatic energy) produced in the user is discharged to the earth 21 from the metallic casing 10 via the resistor 20, the resistor 19 and the plug 13. Further, when electric charge stored on the user moves to the metallic casing 10, a large time constant, which is determined by a capacitance of a human body and a sum of the resistance value of the resistor 20 and that of the resistor 19, restrains a potential of the metallic casing 10 from varying at a high potential and at a large dv/dt, thus making it possible to prevent malfunction or destruction of a circuit on the printed circuit board 8 within the electronic components box 3. Also, no additional insulating structural member is required to avoid the user from touching the metallic casing 10 of the electronic components box 3. In applications where the electronic components box 3 is located in front of the heat exchanger 1, i.e., on the suction side of the indoor unit, as shown in Fig. 5, a flow of air from an interior of a room to the heat exchanger 1 is not blocked by the additional insulating structural member on the electronic components box 3. Accordingly, the electronic components box 3 can be disposed in front of the heat exchanger 1 without lowering the air efficiency.

It is to be noted that although the upper and lower metallic casing segments 10a, 10b are electrically connected and fixed to each other by the male screw 26 and the female screw 27, as shown in Fig. 7, the present invention is not limited by a method of fixation of the upper and lower metallic casing segments 10a, 10b if an electric connection thereof is ensured.

In the case of the second embodiment, as shown in Fig. 7, the flame-retardant resin casing 9 (9a, 9b) encircles the printed circuit board 8, but the flame-retardant resin casing 9 (9a, 9b) is intended to assuredly smother and extinguish a fire if the printed circuit board 8 ignites and not intended to achieve the objective of the present invention, i.e., to prevent malfunction or destruction of equipment that may be caused by electrification of the electronic components box 3.

Although the present invention has been fully described by way of preferred embodiments with reference to the accompanying drawings, it is to be noted here that various changes and modifications will be apparent to those skilled in the art. Therefore, unless such changes and modifications otherwise depart from the scope of the present invention as set forth in the appended claims, they should be construed as being included therein.

### Industrial Applicability

The air conditioner according to the present invention is applicable to air conditioners provided with an air cleaner or a ventilating device.

### Explanation of reference numerals

- 1: heat exchanger
- 2: fan motor
- 3: electronic components box
- 4: high-voltage generating device
- 5: high-voltage power source
- 6: front panel
- 7: front frame
- 8: printed circuit board
- 9: flame-retardant resin casing
- 10: metallic casing
- 11: Peltier element
- 12: alternating-current power source
- 13: plug
- 14: noise filter
- 15: rectifier circuit
- 16: control power source
- 17: primary side ground
- 18: secondary side ground
- 19: resistor
- 20: resistor
- 21: earth
- 22, 26: male screw
- 23: screw terminal portion
- 24a, 24b, 24c: through-hole
- 25, 27: female screw

## Claims

1. An indoor unit of an air conditioner comprising:
an insulated control power source adapted to generate a low control voltage from an output voltage of an alternating-current power source;
a high-voltage power source operable to generate a high voltage from the low control voltage;
a high-voltage generating device to which the high voltage is applied;
an electronic components box made of a metal and accommodating at least the control power source therein;
**characterized by** comprising:
a first resistor operable to electrically connect a secondary side ground of the control power source on a side of the high-voltage generating device to the electronic components box; and
a second resistor operable to electrically connect a primary side ground of the control power source on a side of the alternating-current power source to the secondary side ground;
wherein the primary side ground is grounded via a grounded wire of the alternating-current power source.

2. The indoor unit of the air conditioner according to claim 1, further comprising a heat exchanger, wherein the electronic components box is disposed in front of the heat exchanger and the first and second resistors function as a double insulator.

## Patentansprüche

1. Innenraumeinheit einer Klimaanlage, umfassend:
eine isolierte Steuerenergiequelle, die ausgestaltet ist, um eine niedrige Steuerspannung von einer Ausgangsspannung einer Wechselstromenergiequelle zu erzeugen;
eine Hochspannungsleistungsquelle, die betreibbar ist, um eine Hochspannung von der niedrigen Steuerspannung zu erzeugen;
eine Hochspannungserzeugungsvorrichtung, an die die Hochspannung angelegt wird;
eine aus einem Metall hergestellte, elektronische Komponenten-Box, die zumindest die Steuerenergiequelle umfasst;
**dadurch gekennzeichnet, dass** die Innenraumeinheit umfasst einen ersten Widerstand, der betreibbar ist, um elektrisch eine sekundärseitige Masse der Steuerenergiequelle an einer Seite der Hochspannungserzeugungsvorrichtung mit der elektronische Komponenten-Box zu verbinden; und
einen zweiten Widerstand, der betreibbar ist, um elektrisch eine primärseitige Masse der Steuerenergiequelle auf einer Seite der Wechselstromenergiequelle mit der sekundärseitigen Masse zu verbinden;
wobei die primärseitige Masse über einen geerdeten Draht der Wechselstromenergiequelle geerdet ist.

2. Innenraumeinheit der Klimaanlage nach Anspruch 1, ferner umfassend einen Wärmetauscher, wobei die elektronische Komponenten-Box vor dem Wärmetauscher angeordnet ist und der erste und zweite Widerstand als Doppelisolator fungieren.

## Revendications

1. Unité intérieure d'un climatiseur, comprenant:
une source d'alimentation de commande isolée adaptée pour générer une faible tension de commande à partir d'une tension de sortie d'une source d'alimentation à courant alternatif;
une source de puissance à haute tension apte à être actionnée pour générer une haute tension à partir de la faible tension de commande;
un dispositif de génération de haute tension auquel la haute tension est appliquée;
une boîte de composants électroniques réalisée dans un métal et logeant au moins ladite source d'alimentation de commande;
**caractérisée par le fait que** ladite unité intérieure comprend:
une première résistance apte à être actionnée pour connecter électriquement une masse côté secondaire de la source d'alimentation de commande sur un côté du dispositif de génération de haute tension à ladite boîte de composants électroniques; et
une deuxième résistance apte à être actionnée pour connecter électriquement une masse côté primaire de la source d'alimentation de commande sur un côté de la source d'alimentation à courant alternatif à ladite masse côté secondaire;
dans,laquelle la masse côté primaire est mise à la terre par l'intermédiaire d'un fil mis à la terre de la source d'alimentation à courant alternatif.

2. Unité intérieure du climatiseur selon la revendication 1, comprenant en outre un échangeur de chaleur, dans laquelle ladite boîte de composants électroniques est disposée devant l'échangeur de chaleur et les première et deuxième résistances font fonction de double isolant.
